# FASCICULE DE BREVET EUROPEEN

(11) **EP 3 899 208 B1**
(45) Date de publication et mention de la délivrance du brevet: **25.01.2023**
(21) Numéro de dépôt: 19856430.4
(22) Date de dépôt: 18.12.2019
(51) Int. Cl.: F01D 11/12, F01D 25/24

(54) **ENSEMBLE D'ANNEAU DE TURBINE**
TURBINENDECKBANDANORDNUNG
TURBINE SHROUD ASSEMBLY

(30) Priorité: 19.12.2018 FR 1873404
(43) Date de publication de la demande: 27.10.2021
(73) Titulaire: SAFRAN AIRCRAFT ENGINES, 75015 Paris (FR)
(72) Inventeur: DANIS, Antoine, Claude, Michel, Etienne, 77550 MOISSY-CRAMAYEL (FR); DUFFAU, Clément, Jean, Pierre, 77550 MOISSY-CRAMAYEL (FR); JARROSSAY, Clément, 77550 MOISSY-CRAMAYEL (FR); TABLEAU, Nicolas, Paul, 77550 MOISSY-CRAMAYEL (FR); QUENNEHEN, Lucien, Henri, Jacques, 77550 MOISSY-CRAMAYEL (FR)
(74) Mandataire: Cabinet Beau de Loménie
(86) Numéro de dépôt international: PCT/FR2019/053173
(87) Numéro de publication internationale: WO 2020/128338

(56) Documents cités:
- WO-A1-2018/172654
- FR-A1- 3 055 146
- FR-A1- 3 055 147

## Description

### Domaine Technique

L'invention concerne un ensemble d'anneau de turbine comprenant une pluralité de secteurs d'anneau en matériau composite à matrice céramique ainsi qu'une structure de support d'anneau, et plus particulièrement un procédé de démontage d'un ensemble d'anneau de turbine.

### Technique antérieure

Le domaine d'application de l'invention est notamment celui des moteurs aéronautiques à turbine à gaz. L'invention est toutefois applicable à d'autres turbomachines, par exemple des turbines industrielles.

Dans le cas d'ensembles d'anneau de turbine entièrement métalliques, il est nécessaire de refroidir tous les éléments de l'ensemble et en particulier l'anneau de turbine qui est soumis aux flux les plus chauds. Ce refroidissement a un impact significatif sur la performance du moteur puisque le flux de refroidissement utilisé est prélevé sur le flux principal du moteur. En outre, l'utilisation de métal pour l'anneau de turbine limite les possibilités d'augmenter la température au niveau de la turbine, ce qui permettrait pourtant d'améliorer les performances des moteurs aéronautiques.

Afin de tenter de résoudre ces problèmes, il a été envisagé de réaliser des secteurs d'anneau de turbine en matériau composite à matrice céramique (CMC) afin de s'affranchir de la mise en oeuvre d'un matériau métallique.

Les matériaux CMC présentent de bonnes propriétés mécaniques les rendant aptes à constituer des éléments de structures et conservent avantageusement ces propriétés à températures élevées. La mise en oeuvre de matériaux CMC a avantageusement permis de réduire le flux de refroidissement à imposer lors du fonctionnement et donc à augmenter la performance des turbomachines. En outre, la mise en oeuvre de matériaux CMC permet avantageusement de diminuer la masse des turbomachines et de réduire l'effet de dilatation à chaud rencontré avec les pièces métalliques.

Toutefois, les solutions existantes proposées peuvent mettre en oeuvre un assemblage d'un secteur d'anneau en CMC avec des parties d'accrochage métalliques d'une structure de support d'anneau, ces parties d'accrochage étant soumises au flux chaud. Par conséquent, ces parties d'accrochage métalliques subissent des dilatations à chaud, ce qui peut conduire à une mise sous contrainte mécanique des secteurs d'anneau en CMC et à une fragilisation de ces derniers. On connait par ailleurs les documents WO 2018/172654 A1, FR 3 055 146, FR 3 055 147, FR 2 540 939, GB 2 480 766, EP 1 350 927,

US 2014/0271145, US 2012/082540 et FR 2 955 898 qui divulguent des ensembles d'anneau de turbine.

Il existe un besoin pour améliorer les ensembles d'anneau de turbine existants et leur montage, et notamment les ensembles d'anneau de turbine existants mettant en oeuvre un matériau CMC afin de réduire l'intensité des contraintes mécaniques auxquelles les secteurs d'anneau en CMC sont soumis lors du fonctionnement de la turbine.

En outre, les anneaux en CMC ne supportent pas les montages frettés.

### Exposé de l'invention

L'invention vise à proposer un ensemble d'anneau de turbine permettant le maintien de chaque secteur d'anneau d'une façon déterministe, c'est-à-dire de manière à maîtriser sa position et éviter qu'il se mette à vibrer, d'une part, tout en permettant au secteur d'anneau, et par extension à l'anneau, de se déformer sous les effets des montées en température et des variations de pression, et ce notamment indépendamment des pièces métalliques en interface, et, d'autre part, tout en améliorant l'étanchéité entre le secteur hors veine et le secteur veine, notamment l'étanchéité de la cavité située au niveau de la partie radialement supérieure de l'anneau. Tout cela en simplifiant les manipulations et en réduisant leur nombre pour le montage de l'ensemble d'anneau.

L'invention vise en outre à proposer un ensemble d'anneau de turbine doté d'un flasque amont permettant, d'une part, d'assurer l'étanchéité optimale de la cavité définie par l'anneau, et, d'autre part, de s'accommoder efficacement des différentes longueurs axiales de chaque secteur d'anneau CMC qui compose la couronne d'anneau. Autrement dit pour ce second point, le contact rectiligne entre la partie amont de l'anneau et la patte du flasque amont doit être effectif pour chaque secteur d'anneau, bien que ceux-ci aient des largeurs différentes, ces largeurs étant en effet impactées par les tolérances de fabrication.

Un objet de l'invention propose un ensemble d'anneau de turbine comprenant une pluralité de secteurs d'anneau en matériau composite à matrice céramique formant un anneau de turbine et une structure de support d'anneau, chaque secteur d'anneau ayant, selon un plan de coupe défini par une direction axiale et une direction radiale de l'anneau de turbine, une partie formant base annulaire avec, dans la direction radiale de l'anneau de turbine, une face radialement interne définissant la face interne de l'anneau de turbine et une face radialement externe à partir de laquelle s'étendent en saillie une première et une seconde pattes d'accrochage, la structure de support d'anneau comportant :
- une virole centrale à partir de laquelle s'étendent en saillie une première et une seconde brides radiales à partir desquelles sont maintenues les première et seconde pattes d'accrochage de chaque secteur d'anneau,
- un premier flasque annulaire en une pièce disposé en amont de l'anneau de turbine et de la première bride radiale par rapport au sens d'un flux d'air destiné à traverser l'ensemble d'anneau de turbine, et présentant dans la direction radiale une première extrémité libre, une seconde extrémité opposée à la première extrémité, et
- un second flasque annulaire disposé en amont du premier flasque et présentant une première extrémité libre, une seconde extrémité opposée à la première extrémité, une face amont et une face aval s'étendant toutes deux dans la direction radiale, les secondes extrémités premier et second flasques étant fixées de manière amovible à ladite première bride radiale.

Selon une caractéristique générale de l'objet, que le premier flasque comprend un épaulement s'étendant en saillie dans la direction axiale vers l'amont depuis la seconde extrémité du premier flasque, et le second flasque comprend un renfoncement annulaire sur le coin formé à la jonction entre la seconde extrémité et la face aval du second flasque, ledit renfoncement formant une butée axiale configurée pour coopérer par emboîtement avec ledit épaulement dans la direction axiale.

Le double épaulement prévu entre les deux flasques annulaires et formé par l'épaulement du premier flasque annulaire et le renfoncement du second flasque annulaire permet de limiter les problèmes de rampement thermique entre les deux flasques annulaires métalliques.

Plus la longueur sur laquelle l'épaulement du premier flasque annulaire et le renfoncement du second flasque annulaire coopèrent, c'est-à-dire sont en contact, est importante, meilleure est l'étanchéité et la qualité du contact entre l'épaulement et le renfoncement. La longueur de coopération est mesurée dans la direction circonférentielle. Pour garantir un contact au pire des tolérances, la longueur sur laquelle l'épaulement et le renfoncement coopèrent est au minimum de 1 mm.

Selon un premier aspect de l'ensemble d'anneau de turbine, le premier flasque comprend en outre une première portion s'étendant depuis la première extrémité, et une seconde portion s'étendant entre la première portion et la seconde extrémité, la première portion du premier flasque étant en appui contre la première patte d'accrochage de l'anneau de turbine. La seconde portion du premier flasque est fixée à la première bride radiale de la virole centrale de la structure de support d'anneau. La première portion du premier flasque annulaire comprend une pluralité de fentes radiales qui débouchent à la première extrémité du premier flasque annulaire délimitant des secteurs de première portion du premier flasque annulaire.

Les fentes s'étendent uniquement dans la première portion du premier flasque, pas dans la seconde portion. Lesdits secteurs de première portion s'étendent dans une direction circonférentielle de l'anneau de turbine.

Intégrer un premier flasque annulaire amont complètement sectorisé permettrait à chaque secteur du premier flasque amont sectorisé de s'adapter à la largeur de l'anneau en CMC qui est en vis-à-vis, c'est-à-dire à la longueur axiale de chaque secteur d'anneau. Ainsi les fuites axiales, notamment au niveau des appuis rectilignes, entre l'anneau et le premier flasque amont sont annulées. Cependant, une telle solution occasionnerait des fuites importantes au niveau des secteurs entre chaque flasque sectorisé. Et ce, même si des dispositifs comme des languettes d'étanchéité sont mises en place pour atténuer ces fuites vers les cavités externes de l'anneau.

Intégrer directement un premier flasque annulaire en une seule pièce, autrement dit non sectorisé, permettrait d'assurer l'étanchéité axiale entre l'anneau sectorisé en CMC et le carter annulaire, notamment en évitant les fuites inter-secteurs par rapport à un cas où le premier flasque amont est sectorisé. Cependant, la continuité du premier flasque annulaire amont, notamment au niveau des appuis rectilignes en vis-à-vis des secteurs d'anneau qui n'ont pas tous la même largeur (à cause des tolérances de fabrication) provoquerait des fuites importantes au niveau des appuis rectilignes. Le premier flasque annulaire amont ne s'accommoderait pas assez bien aux secteurs d'anneau qui ont des largeurs différentes.

La première portion du premier flasque annulaire selon l'invention permet ainsi, par sa conformation annulaire sans sectorisation, d'assurer l'étanchéité axiale entre l'anneau de turbine sectorisé en CMC et le carter annulaire. Et la sectorisation de la seconde portion du premier flasque annulaire selon l'invention permet d'accommoder chaque secteur de seconde portion du premier flasque annulaire avec un secteur d'anneau de turbine en vis-à-vis. De cette manière, la fuite au niveau des appuis axiaux de l'anneau de turbine en CMC est annulée.

L'ensemble d'anneau de turbine doté ainsi d'un premier flasque annulaire semi-sectorisé permet donc de réduire globalement les fuites entre la cavité de l'anneau de turbine et l'extérieur.

De préférence, La seconde portion du premier flasque est fixée de manière amovible à la première bride radiale de la virole centrale de la structure de support d'anneau.

Selon un deuxième aspect de l'ensemble de turbine, le premier flasque comprend en outre un joint inter-secteur pour chaque fente radiale du premier flasque annulaire, chaque fente radiale présentant une première et une seconde surfaces parallèles dans la direction radiale et dans la direction axiale, la première surface d'une fente radiale comprenant une première gorge et la seconde surface comprenant une seconde gorge s'étendant en regard de la première gorge symétriquement à la première gorge par rapport à un plan s'étendant dans la direction axiale et dans la direction radiale le long de la fente radiale, une première portion du joint inter-secteur étant insérée dans la première gorge et une seconde portion du joint inter-secteur étant insérée dans la seconde gorge.

Les joints inter-secteur, ou languettes d'étanchéité, insérés dans les fentes radiales permettent de réduire les fuites au niveau de la cavité de l'anneau.

Selon un troisième aspect de l'ensemble d'anneau de turbine, le premier flasque annulaire peut comprendre, pour chaque fente radiale, un orifice de décharge, et chaque fente radiale débouche d'une part à la première extrémité du premier flasque annulaire et d'autre part dans l'orifice de décharge.

En d'autres termes, chaque fente radiale peut comprendre une première extrémité ouverte à la première extrémité du premier flasque annulaire et une seconde extrémité opposée à ladite première extrémité de la fente radiale et ouverte sur l'orifice de décharge.

La transition entre la seconde portion sectorisée et la première portion annulaire du premier flasque est appelée par la suite le fond de rainure. Le fond de rainure constitue le siège de concentrations de contrainte tangentielle lorsque le premier flasque annulaire semi-sectorisé est soumis à un gradient radial de température. Ces concentrations de contraintes tangentielles en fond de rainure peuvent initier des criques et ainsi diminuer la durée de vie du premier flasque annulaire.

Les orifices de décharge permettent de diminuer significativement les concentrations de contraintes en diffusant les contraintes autour de l'orifice de décharge.

Selon un quatrième aspect de l'ensemble de turbine, les orifices de décharge peuvent être des orifices circulaires présentant un diamètre compris entre 0,1 mm et 8 mm et de préférence entre 1 mm et 5 mm.

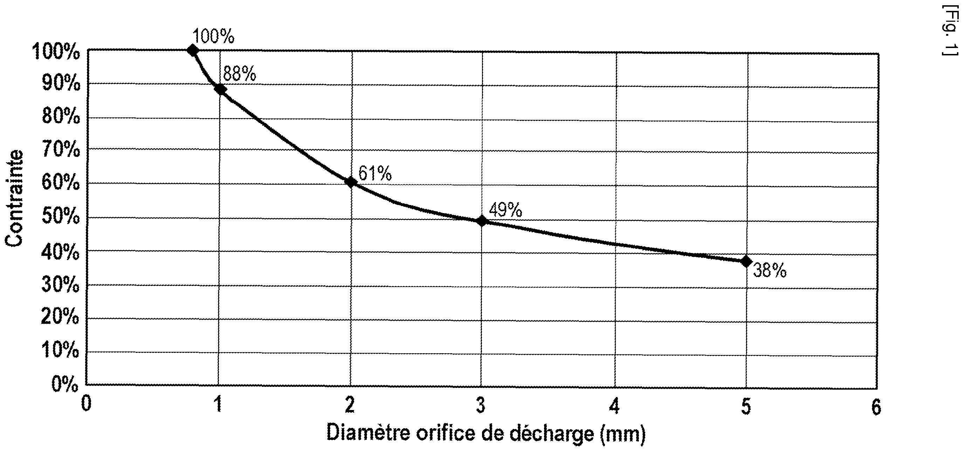

Le diamètre de l'orifice circulaire de décharge joue un rôle clé sur la baisse des contraintes, comme le montre le graphique de la figure 1 représentant l'évolution du taux de contraintes en fonction du diamètre de l'orifice de décharge, le taux étant déterminé par rapport à un premier flasque annulaire amont sans orifice de décharge. Sur ce graphique, on peut voir que l'ajout d'un trou de décharge allant jusqu'à un diamètre de 5 mm permet de baisser le niveau de contrainte maximal de 62%. L'ajout de ces orifices de décharges permet donc d'assurer l'intégrité structurelle du premier flasque annulaire lorsqu'il est soumis à un gradient radial de température.

Dans une variante, les orifices de décharges peuvent être des orifices oblongs radiaux, c'est-à-dire des orifices présentant une forme oblongue ayant une longueur s'étendant dans la direction radiale et une largeur dans une direction orthogonale à la direction radiale, la longueur étant plus grande que la largeur de l'orifice oblong.

Dans une autre variante, les orifices de décharges peuvent être des orifices oblongs tangentiels, c'est-à-dire des orifices présentant une forme oblongue ayant une largeur s'étendant dans la direction radiale et une longueur dans une direction orthogonale à la direction radiale, autrement dit une largeur s'étendant dans une direction tangentielle, la longueur étant plus grande que la largeur de l'orifice oblong.

Selon un cinquième aspect de l'ensemble d'anneau de turbine, le premier flasque peut comprendre, pour chaque fente radiale, une encoche réalisée dans l'épaulement, l'encoche s'étendant dans un plan comprenant une direction circonférentielle de l'anneau et la direction axiale et coupant un plan comprenant la direction axiale et la direction radiale et traversant la fente radiale.

Autrement dit, chaque encoche est en regard d'une fente radiale du premier flasque annulaire. Chaque encoche prévue dans le premier flasque annulaire permet, lorsque le second flasque annulaire est pris isolément, c'est-à-dire démonté, le passage d'une électrode pour faciliter la formation des gorges dans les première et seconde surfaces de la fente pour l'insertion d'une languette d'étanchéité.

Selon un sixième aspect de l'ensemble d'anneau de turbine, le renfoncement annulaire du second flasque est segmenté dans la direction circonférentielle en une pluralités de segments de renfoncement, deux segments de renfoncement adjacents étant séparés par un ergot radial de centrage formant une butée dans une direction circonférentielle de l'anneau et conformé pour coopérer avec une encoche du premier flasque dans la direction circonférentielle, chaque ergot radial, s'étendant depuis le renfoncement en saillie dans la direction radiale et dans la direction axiale vers l'aval.

L'ergot radial de centrage permet d'indexer, lors du montage de l'ensemble de l'anneau, le second flasque annulaire par rapport au premier flasque annulaire. Ainsi, au lieu de réaliser un indexage des flasques annulaires à l'aide de deux pions par secteur de flasque, ce qui nécessite un jeu entre les flasques et les pions, l'indexage peut être réalisé à l'aide des ergots radiaux de centrage ce qui permet, d'une part, de réduire le nombre de pièces et de limiter le nombre de perçages dans les flasques, les perçages pouvant être une source de fuite, et, d'autre part, d'améliorer la précision de l'indexage.

Le second flasque annulaire comprend de préférence au moins deux ergots radiaux de centrage destiné à chacune coopérer avec une encoche du premier flasque annulaire.

Selon un septième aspect de l'ensemble d'anneau de turbine, chaque encoche comprend, dans un plan comprenant la direction circonférentielle et la direction axiale de l'anneau, deux parois latérales parallèles s'étendant selon la direction axiale et une paroi de fond s'étendant selon la direction circonférentielle entre les deux parois latérales, les parois latérales de l'encoche étant chacune raccordée à la paroi de fond en décrivant un arc.

De préférence, les arcs de raccordement présentent chacun un rayon de courbure supérieur ou égal à 1,5 mm.

Les arcs de raccordement présentant des rayons de 1,5 mm au minimum permettent d'éviter les concentrations de contraintes entre les ergots radiaux et les encoches.

Selon un huitième aspect de l'ensemble d'anneau de turbine, la première extrémité du second flasque annulaire est distante de la première extrémité du premier flasque annulaire dans la direction axiale.

Le second flasque annulaire séparé du premier flasque annulaire au niveau de son extrémité libre permet de fournir à l'ensemble d'anneau de turbine un flasque amont dédié à la reprise de l'effort du distributeur haute pression (DHP). Le second flasque annulaire en amont de l'anneau de turbine est exempt de tout contact avec l'anneau et est configuré pour faire transiter le maximum d'effort axial induit par le DHP directement dans la structure de support d'anneau sans passer par l'anneau qui présente, lorsqu'il est en CMC, un admissible mécanique faible.

En effet, laisser un espace entre les premières extrémités du premier et du second flasques annulaires permet de dévier l'effort reçu par le second flasque, en amont du premier flasque annulaire qui est au contact de l'anneau de turbine, et de le faire transiter directement vers la virole centrale de la structure de support d'anneau via la seconde extrémité du seconde flasque annulaire, sans impacter le premier flasque annulaire et donc sans impacter l'anneau de turbine. La première extrémité du premier flasque ne subissant pas d'effort, l'anneau de turbine est ainsi préservé de cet effort axial.

Le transit de l'effort DHP par l'intermédiaire du second flasque annulaire peut induire son basculement. Ce basculement peut entraîner un contact non maîtrisé entre les parties basses, c'est-à-dire les premières extrémités, du second flasque annulaire et du premier flasque annulaire au contact de l'anneau de turbine, ce qui aurait pour conséquence de transmettre directement l'effort DHP à l'anneau.

Dans une variante, la seconde extrémité du premier flasque et la seconde extrémité du second flasque peuvent être séparées par une butée de contact. La butée de contact prévue entre les secondes extrémités du premier et du second flasque annulaires permet d'éviter le contact entre la partie basse du second flasque annulaire, disposé en amont du premier flasque, et celle du premier flasque annulaire, suite à ce basculement. Le transit direct de l'effort DHP vers l'anneau est donc évité.

En outre, le caractère amovible des flasques annulaires permet d'avoir un accès axial à la cavité de l'anneau de turbine. Cela permet d'assembler les secteurs d'anneau ensemble à l'extérieur de la structure de support d'anneau et ensuite de venir glisser axialement l'ensemble ainsi assemblé dans la cavité de la structure de support d'anneau jusqu'à venir en appui contre la seconde bride radiale, avant de fixer le flasque annulaire sur la virole centrale de la structure de support d'anneau.

Lors de l'opération de fixation de l'anneau de turbine sur la structure de support de l'anneau, il est possible d'utiliser un outil comportant un cylindre ou un anneau sur lequel sont appuyés ou ventousés les secteurs d'anneau pendant leur assemblage en couronne.

La solution définie ci-dessus pour l'ensemble d'anneau permet ainsi de maintenir chaque secteur d'anneau de façon déterministe, c'est-à-dire de maîtriser sa position et d'éviter qu'il se mette à vibrer, tout en améliorant l'étanchéité entre le secteur hors veine et le secteur veine, en simplifiant les manipulations et en réduisant leur nombre pour le montage de l'ensemble d'anneau, et en permettant à l'anneau de se déformer sous les effet de température et de pression notamment indépendamment des pièces métalliques en interface.

Selon un neuvième aspect de l'ensemble d'anneau de turbine, le premier flasque peut présenter une épaisseur dans la direction axiale inférieure à l'épaisseur dans la direction axiale du second flasque.

La finesse de la seconde extrémité du premier flasque annulaire offre de la souplesse à la partie amont de la structure de support destinée à être au contact de l'anneau.

Selon un dixième aspect de l'ensemble d'anneau de turbine, la seconde bride radiale de la structure de support d'anneau présente une première extrémité libre et une seconde extrémité solidaire de la virole centrale de la structure de support d'anneau, la première extrémité de la seconde bride radiale étant au contact de la seconde patte d'accrochage de l'anneau de turbine et présentant une épaisseur dans la direction axiale supérieure à l'épaisseur de la première extrémité du premier flasque annulaire.

La maîtrise de la rigidité au niveau des contacts axiaux de la structure de support d'anneau avec l'anneau assure le maintien de l'étanchéité en toute circonstance, sans pour autant induire des efforts axiaux trop élevés sur l'anneau. L'épaisseur accrue de la partie aval de la structure de support d'anneau, en particulier de la première extrémité de la seconde bride radiale, l'extrémité libre, permet d'offrir une plus grande rigidité à la partie aval de la structure de support d'anneau par rapport à sa partie amont comprenant la première bride radiale annulaire et les premier et second flasques annulaires. Cette rigidité accrue permet de diminuer les fuites axiales aval entre l'anneau et le carter, c'est-à-dire la structure de support d'anneau, dans le cas d'un appui rectiligne.

Selon un onzième aspect de l'ensemble d'anneau de turbine, le secteur d'anneau peut présenter une section en lettre grecque pi (π) inversée selon le plan de coupe défini par la direction axiale et la direction radiale, et l'ensemble peut comprendre, pour chaque secteur d'anneau, au moins trois pions pour maintenir radialement le secteur d'anneau en position, les première et seconde pattes d'accrochage de chaque secteur d'anneau comprenant chacune une première extrémité solidaire de la face externe de la base annulaire, une seconde extrémité libre, au moins trois oreilles de réception desdits au moins trois pions, au moins deux oreilles s'étendant en saillie de la seconde extrémité d'une des première ou seconde pattes d'accrochage dans la direction radiale de l'anneau de turbine et au moins une oreille s'étendant en saillie de la seconde extrémité de l'autre patte d'accrochage dans la direction radiale de l'anneau de turbine, chaque oreille de réception comportant un orifice de réception d'un des pions.

Selon un douzième aspect de l'ensemble d'anneau de turbine, le secteur d'anneau peut présenter une section ayant une forme de K allongée selon le plan de coupe défini par la direction axiale et la direction radiale, les première et une deuxième pattes d'accrochage ayant une forme de S.

Selon un treizième aspect de l'ensemble d'anneau de turbine, le secteur d'anneau peut présenter, sur au moins une plage radiale du secteur d'anneau, une section en O selon le plan de coupe défini par la direction axiale et la direction radiale, la première et la deuxième pattes d'accrochage présentant chacune une première extrémité solidaire de la face externe et une seconde extrémité libre, et chaque secteur d'anneau comprenant une troisième et une quatrième pattes d'accrochage s'étendant chacune, dans la direction axiale de l'anneau de turbine, entre une seconde extrémité de la première patte d'accrochage et une seconde extrémité de la deuxième patte d'accrochage, chaque secteur d'anneau étant fixé à la structure de support d'anneau par une vis de fixation comportant une tête de vis en appui contre la structure de support d'anneau et un filetage coopérant avec un taraudage réalisé dans une plaque de fixation, la plaque de fixation coopérant avec les troisième et quatrième pattes d'accrochage. Le secteur d'anneau comprend en outre des pions radiaux s'étendant entre la virole centrale et les troisième et quatrième pattes d'accrochage.

Un autre objet de l'invention propose une turbomachine comprenant un ensemble d'anneau de turbine tel que défini ci-dessus.

### Brève description des dessins

L'invention sera mieux comprise à la lecture faite ci-après, à titre indicatif mais non limitatif, en référence aux dessins annexés sur lesquels :
[Fig. 1] La figure 1, déjà présentée, présente un graphique de l'évolution de la contrainte maximale exercée sur le premier flasque annulaire en fonction du diamètre de l'orifice de décharge.
[Fig. 2] La figure 2 est une vue schématique en perspective d'un premier mode de réalisation d'un ensemble d'anneau de turbine selon l'invention.
[Fig. 3] La figure 3 est une vue schématique en perspective éclatée de l'ensemble d'anneau de turbine de la figure 2.
[Fig. 4] La figure 4 est une vue schématique en coupe de l'ensemble d'anneau de turbine de la figure 2.
[Fig. 5] La figure 5 est une vue schématique en coupe du premier flasque annulaire amont de la figure 2 selon le plan de coupe V-V.
[Fig. 6] La figure 6 est une vue schématique en coupe d'un deuxième mode de réalisation de l'ensemble d'anneau de turbine.
[Fig. 7] La figure 7 présente une vue schématique en coupe d'un troisième mode de réalisation de l'ensemble d'anneau de turbine.

### Description des modes de réalisation

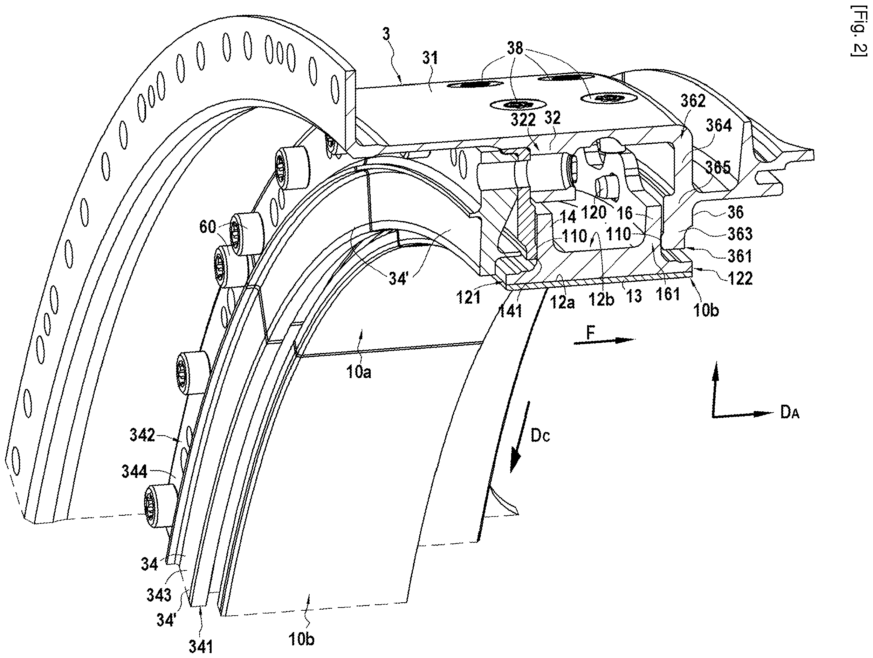

La figure 2 montre un ensemble d'anneau de turbine haute pression comprenant un anneau de turbine 1 en matériau composite à matrice céramique (CMC) et une structure métallique de support d'anneau 3. L'anneau de turbine 1 entoure un ensemble de pales rotatives (non représentées). L'anneau de turbine 1 est formé d'une pluralité de secteurs d'anneau 10, la figure 2 étant une vue en section radiale. La flèche D_{A} indique la direction axiale de l'anneau de turbine 1 tandis que la flèche D_{R} indique la direction radiale de l'anneau de turbine 1 et la flèche D_{C} indique la direction circonférentielle de l'anneau de turbine 1. Pour des raisons de simplification de présentation, la figure 1 est une vue partielle de l'anneau de turbine 1 qui est en réalité un anneau complet.

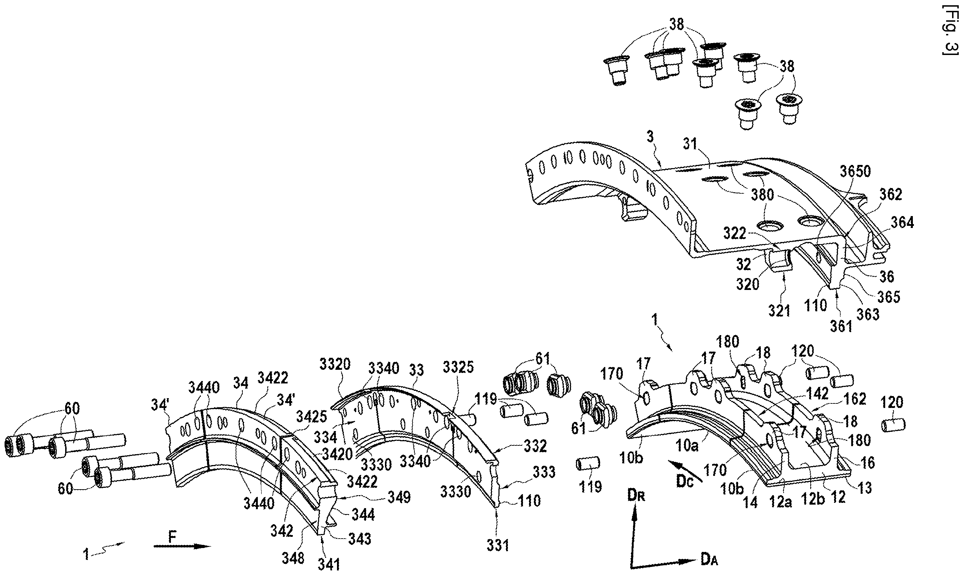

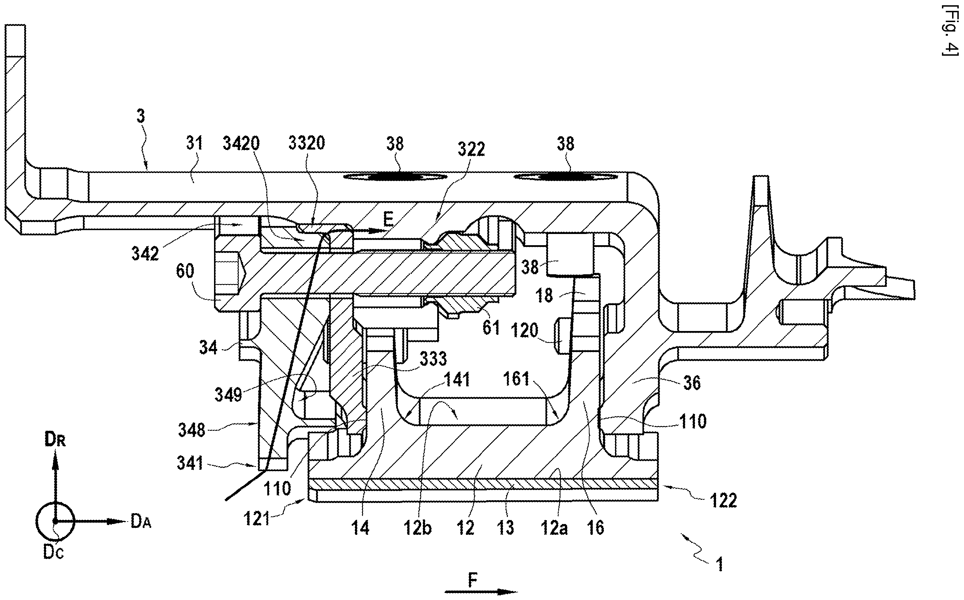

Comme illustré sur les figures 3 et 4 qui présentent respectivement une vue schématique en perspective éclatée et une vue en coupe de l'ensemble d'anneau de turbine de la figure 2, la vue en coupe étant selon un plan de coupe comprenant la direction radiale D_{R} et la direction axiale D_{A} et orthogonal à la direction circonférentielle D_{C}, chaque secteur d'anneau 10 présente, selon un plan défini par les directions axiale D_{A} et radiale D_{R}, une section sensiblement en forme de la lettre grecque π inversée. La section comprend en effet une base annulaire 12 et des pattes radiales d'accrochage amont et aval, respectivement 14 et 16. Les termes "amont" et "aval" sont utilisés ici en référence au sens d'écoulement du flux gazeux dans la turbine représenté par la flèche F sur la figure 1. Les pattes du secteur d'anneau 10 pourraient avoir une autre forme, la section du secteur d'anneau présentant une autre forme que π, comme par exemple une forme en K ou en O.

La base annulaire 12 comporte, suivant la direction radiale D_{R} de l'anneau 1, une face interne 12a et une face externe 12b opposées l'une à l'autre. La face interne 12a de la base annulaire 12 est revêtue d'une couche 13 de matériau abradable pour définir une veine d'écoulement de flux gazeux dans la turbine. Les termes "interne" et "externe" sont utilisés ici en référence à la direction radiale D_{R} dans la turbine.

Les pattes radiales d'accrochage amont et aval 14 et 16 s'étendent en saillie, suivant la direction D_{R}, à partir de la face externe 12b de la base annulaire 12 à distance des extrémités amont et aval 121 et 122 de la base annulaire 12. Les pattes radiales d'accrochage amont et aval 14 et 16 s'étendent sur toute la largeur du secteur d'anneau 10, c'est-à-dire sur tout l'arc de cercle décrit par le secteur d'anneau 10, ou encore sur toute la longueur circonférentielle du secteur d'anneau 10.

Sur les figures 2 et 3 la portion d'anneau de turbine 1 représentée comprend un secteur d'anneau 10 complet entouré de deux demis secteurs d'anneau 10. Pour une meilleure compréhension, le secteur d'anneau complet est référencé 10a et les demis secteurs d'anneau sont référencés 10b sur la figure 3.

Comme cela est illustré sur les figures 2 à 4, la structure de support d'anneau 3 qui est solidaire d'un carter de turbine comprend une virole centrale 31, s'étendant dans la direction axiale D_{A}, et ayant un axe de révolution confondu avec l'axe de révolution de l'anneau de turbine 1 lorsqu'ils sont fixés ensemble, ainsi qu'une première bride radiale annulaire 32 et une seconde bride radiale annulaire 36, la première bride radiale annulaire 32 étant positionnée en amont de la seconde bride radiale annulaire 36 qui se trouve donc en aval de la première bride radiale annulaire 32.

La seconde bride radiale annulaire 36 s'étend dans la direction circonférentielle D_{C} de l'anneau 1 et, suivant la direction radiale D_{R}, depuis la virole centrale 31 vers le centre de l'anneau 1. Elle comprend une première extrémité 361 libre et une seconde extrémité 362 solidaire de la virole centrale 31. La seconde bride radiale annulaire 36 comporte une première portion 363, une seconde portion 364, et une troisième portion 365 comprise entre la première portion 363 et la seconde portion 364. La première portion 363 s'étend entre la première extrémité 361 et la troisième portion 365, et la seconde portion 364 s'étend entre la troisième portion 365 et la seconde extrémité 362. La première portion 363 de la seconde bride radiale annulaire 36 est au contact de la bride radiale d'accrochage aval 16. La première portion 363 et la troisième portion 365 présentent une épaisseur accrue par rapport à celle de la seconde portion 364 pour offrir une rigidité accrue à la seconde bride radiale par rapport à la partie amont comportant notamment la première bride radiale 32, de manière à diminuer les fuites axiales de l'anneau dans le cas d'un appui rectiligne.

La première bride radiale annulaire 32 s'étend dans la direction circonférentielle D_{C} de l'anneau 1 et, suivant la direction radiale D_{R}, depuis la virole centrale 31 vers le centre de l'anneau 1. Elle comprend une première extrémité 321 libre et une seconde extrémité 322 solidaire de la virole centrale 31.

Comme cela est illustré sur les figures 1 à 3, l'ensemble d'anneau de turbine 1 comprend un premier flasque annulaire 33 et un second flasque annulaire 34, les deux flasques annulaires 33 et 34 étant fixés de manière amovible sur la première bride radiale annulaire 32. Les premier et second flasques annulaires 33 et 34 sont disposés en amont de l'anneau de turbine 1 par rapport au sens F d'écoulement du flux gazeux dans la turbine.

Le premier flasque annulaire 33 est disposé en aval du second flasque annulaire 34. Le premier flasque annulaire 33 est en une seule pièce alors que le second flasque annulaire 34 peut être sectorisé en une pluralité de secteurs annulaires 34' de second flasque 34 ou être en une seule pièce.

Le premier flasque annulaire 33 présente une première extrémité 331 libre et une seconde extrémité 332 fixée de manière amovible à la structure de support d'anneau 3, et plus particulièrement à la première bride radiale annulaire 32. En outre, le premier flasque annulaire 33 présente une première portion 333 et une seconde portion 334, la première portion 333 s'étendant entre la première extrémité 331 et la seconde portion 334, et la seconde portion 334 s'étendant entre la première portion 333 et la seconde extrémité 332.

Le second flasque annulaire 34 présente une première extrémité 341 libre et une seconde extrémité 342 opposée à la première extrémité 341 et au contact de la couronne centrale 31. La seconde extrémité 342 du second flasque annulaire 34 est également fixée de manière amovible à la structure de support d'anneau 3, et plus particulièrement à la première bride radiale annulaire 32. Le second flasque annulaire 34 comprend en outre une première portion 343 et une seconde portion 344, la première portion 343 s'étendant entre la première extrémité 341 et la seconde portion 344, et la seconde portion 344 s'étendant entre la première portion 343 et la seconde extrémité 342. Le second flasque annulaire 34 comprend également une face amont 348 et une face aval 349 opposée à la face amont 348, les faces amont et aval 348 et 349 s'étendant chacune dans des plans comprenant la direction radiale D_{R} et la direction circonférentielle D_{C} de l'anneau 1.

Lorsque l'ensemble d'anneau 1 est monté, la première portion 333 du premier flasque annulaire 33 se trouve en appui contre la patte radiale d'accrochage amont 14 de chacun des secteurs d'anneau 10 composant l'anneau de turbine 1, et la seconde portion 334 du premier flasque annulaire 34 se trouve en appui contre au moins une partie de la première bride radiale annulaire 32.

Les premier et second flasques annulaires amont 33 et 34 sont conformés pour avoir les premières portions 333 et 343 distantes l'une de l'autre et les secondes portions 334 et 344 en contact, les deux flasques 33 et 34 étant fixés de manière amovible sur la bride radiale annulaire amont 32 à l'aide de vis 60 et d'écrous 61 de fixation, les vis 60 traversant des orifices 3340, 3440 et 320 prévus respectivement dans les secondes portions 334 et 344 des deux flasques annulaires 33 et 34 ainsi que dans la bride radiale annulaire amont 32.

Le second flasque annulaire 34 est dédié à la reprise de l'effort du distributeur haute pression (DHP) sur l'ensemble d'anneau 1 en faisant transiter cet effort vers la ligne carter qui est plus robuste mécaniquement, c'est-à-dire vers la ligne de la structure de support d'anneau 3 comme cela est illustré par les flèches E d'effort présentées sur la figure 4. L'effort résiduel, qui passe par le premier flasque amont 33 est réduit puisque la première portion 333 du premier flasque amont 33 présente une section réduite, et est donc plus souple, ce qui permet d'appliquer un minimum d'effort sur l'anneau 1 CMC.

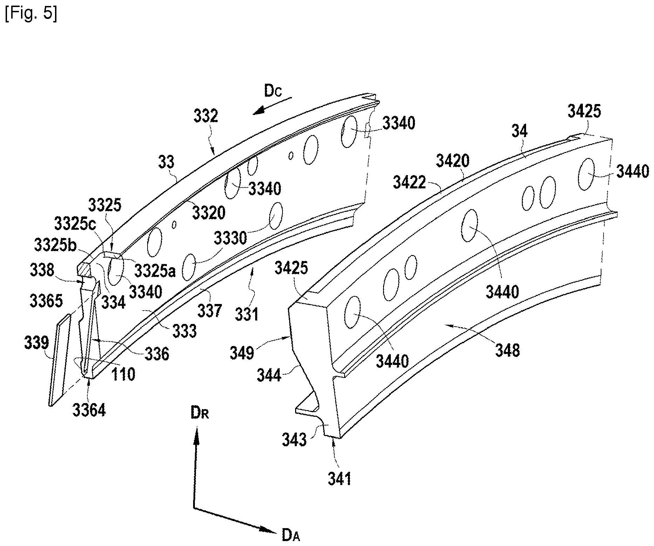

Sur la figure 5 est illustré une vue schématique en coupe du premier flasque annulaire amont de la figure 2 selon un plan de coupe comprenant la direction radiale D_{R} et la direction axiale D_{A} et traversant une fente radiale 336 du premier flasque annulaire 33.

Comme cela est illustré sur la figure 5, la première portion 333 du premier flasque annulaire 33 présente une pluralité de fentes radiales 336 s'étendant depuis la première extrémité 331. Les fentes radiales 336 présentent une première extrémité 3361 et une seconde extrémité 3362 opposée à la première extrémité 3361, la première extrémité 3361 étant à l'intérieure de la seconde extrémité 3362 dans la direction radiale D_{R}. Les premières extrémités 3361 des fentes radiales 36 sont ouvertes sur la première extrémité 331 du premier flasque annulaire 33. Chaque fente radiale 336 présente une première et une seconde surfaces 3364 parallèles dans la direction radiale D_{R} et dans la direction axiale D_{A}, la distance entre la première et la seconde surface 3364, qui correspond à l'épaisseur tangentielle des rainures, peut être comprise entre 0,1 mm et 1 mm. La longueur radiale des fentes peut être comprise entre 10 et 90 % de la longueur radiale complète du flasque amont. Une longueur radiale de fente faible favorise la diminution des fuites, mais dégrade la capacité d'accommodation des secteurs du flasque vis-à-vis des secteurs d'anneau. Une longueur radiale de fente élevée favorise l'accommodation des secteurs du flasque vis-à-vis des secteurs d'anneau mais augmente le niveau de fuite.

Chaque paire de fentes radiales 336 adjacentes délimite ainsi, entre les deux fentes radiales 336 adjacente, un secteur de première portion 337 du premier flasque annulaire 33. Chaque secteur de première portion 337 présente une forme de secteur d'anneau, c'est-à-dire un solide formé par deux arcs de cercles concentriques et de rayons différents et deux segments de droites correspondants chacun à un segment du rayon du grand arc de cercle compris entre le petit arc de cercle et le grand arc de cercle. Chaque secteur de première portion 337 est indépendant des autres secteurs de première portion 337 étant donné que les fentes radiales 36 sont ouvertes à leur première extrémité 3361.

Le premier flasque annulaire 33 comprend en outre des orifices de décharge 338, et plus particulièrement un orifice de décharge 338 par fente radiale 336. Chaque orifice de décharge 338 communique avec la seconde extrémité 3362 d'une fente radiale 36. Autrement dit, chaque orifice de décharge 338 est réalisé dans le premier flasque annulaire 33 à la seconde extrémité 3362 d'une fente radiale de sorte que la seconde extrémité 3362 d'une fente radiale soit ouverte sur l'orifice de décharge 338 correspondant.

Dans le premier mode de réalisation illustré sur les figures 2 à 5, les orifices de décharge 338 sont des orifices circulaires présentant un diamètre compris entre 1 mm et 5 mm.

Comme cela est illustré sur la figure 5, le premier flasque annulaire 33 comprend en outre un joint inter-secteur 339 pour chaque fente radiale 336.

Chaque fente radiale 336 présente une première et une seconde surfaces 3364 de part et d'autre de la fente radiale 336. La figure 5 étant une coupe réalisée au travers d'une fente radiale 336, seule une surface 3364 de fente radiale 336 est représentée. Les première et seconde surfaces 3364 d'une fente radiale 336 sont parallèles, c'est-à-dire qu'elles sont disposées en regard l'une de l'autre sur toute la longueur radiale de la fente radiale 336.

La première surface 3364 comprend une première gorge 3365 s'étendant principalement dans la direction radiale D_{R}. De même, la seconde surface comprend une seconde gorge s'étendant principalement dans la direction radiale D_{R}. La seconde gorge s'étend en regard de la première gorge 3365 symétriquement à la première gorge 3365 par rapport au plan de coupe VI-VI.

Les première et seconde gorges 3365 d'une fente radiale 336 sont conformées pour recevoir le joint inter-secteur 339, ou lamelle d'étanchéité. Le joint inter-secteur, permet ainsi d'assurer une étanchéité entre les secteurs de première portion 333 du premier flasque annulaire 33.

En outre, comme cela est illustré sur les figures 2 à 5, le premier flasque 33 comprend un épaulement 3320 annulaire s'étendant en saillie dans la direction axiale D_{A} vers l'amont depuis la seconde extrémité 332 du premier flasque 33, ainsi que, pour chaque fente radiale 336 du premier flasque 33, une encoche 3325 réalisée dans l'épaulement 3320. Chaque encoche 3325 s'étend dans un plan qui comprend la direction circonférentielle D_{C} et la direction axiale D_{A} de l'anneau et qui coupe un plan comprenant la direction axiale D_{A} et la direction radiale D_{R} et traversant la fente radiale 336.

Le second flasque 34 comprend un renfoncement 3420 annulaire qui correspond à un épaulement annulaire complémentaire de l'épaulement 3320 annulaire du premier flasque 33. Autrement dit, le renfoncement 3420 annulaire forme une butée axiale configurée pour coopérer avec ledit épaulement 3320 dans la direction axiale D_{A}.

Le renfoncement 3420 annulaire du second flasque 34 est réalisé sur le coin formé à la jonction entre la seconde extrémité 342 et la face aval 349 du second flasque 34 à partir d'une pluralité de segments de renfoncement 3422, les segments étant alignés successivement dans la direction circonférentielle D_{C} pour former le renfoncement annulaire 3420.

Le second flasque 34 comprend une pluralité d'ergots radiaux 3425 de centrage s'étendant depuis le renfoncement 3420 en saillie dans la direction radiale D_{R} et dans la direction axiale D_{A} vers l'aval. Dans le mode de réalisation illustré sur les figures 2 à 5, le second flasque 34 comprend autant d'ergots radiaux de centrage 3425 que le nombre d'encoches 3320 que le premier flasque 33 comprend.

Deux segments de renfoncement 3422 adjacents du second flasque 34 sont séparés par un ergot radial 3425 de centrage. Chaque ergot radial de centrage 3425 forme une butée dans une direction circonférentielle D_{C} de l'anneau et est conformé pour coopérer avec une encoche 3325 du premier flasque 33 dans la direction circonférentielle D_{C.}

Chaque encoche 3325 comprend, dans un plan comprenant la direction circonférentielle D_{C} et la direction axiale D_{A} de l'anneau, deux parois latérales 3325a parallèles s'étendant selon la direction axiale D_{A} et une paroi de fond 3325b s'étendant selon la direction circonférentielle D_{C} entre les deux parois latérales 3325a. Les parois latérales 3325a d'une l'encoche 3325 sont chacune raccordées à la paroi de fond 3325b en décrivant un arc 3325c présentant un rayon de courbure supérieur ou égal à 1,5 mm.

Dans la direction axiale D_{A}, la bride radiale annulaire aval 36 de la structure de support d'anneau 3 est séparée du premier flasque annulaire amont 33 d'une distance correspondant à l'écartement des pattes radiales d'accrochage amont et aval 14 et 16 de manière à maintenir ces dernières entre la bride radiale annulaire aval 36 et le premier flasque amont 33.

Pour maintenir en position les secteurs d'anneau 10, et donc l'anneau de turbine 1, avec la structure de support d'anneau 3, l'ensemble d'anneau comprend, pour chaque secteur d'anneau 10, deux premiers pions 119 coopérant avec la patte d'accrochage amont 14 et le premier flasque annulaire 33, et deux seconds pions 120 coopérant avec la patte d'accrochage aval 16 et la seconde bride radiale annulaire 36.

Pour chaque secteur d'anneau 10 correspondant, la première portion 333 du premier flasque annulaire 33 comprend deux orifices 3330 de réception des deux premiers pions 119, et la troisième portion 365 de la bride radiale annulaire 36 comprend deux orifices 3650 configurés pour recevoir les deux seconds pions 120.

Pour chaque secteur d'anneau 10, chacune des pattes radiales d'accrochage amont et aval 14 et 16 comprend une première extrémité, 141 et 161, solidaire de la face externe 12b de la base annulaire 12 et une seconde extrémité, 142 et 162, libre. La seconde extrémité 142 de la patte radiale d'accrochage amont 14 comprend deux premières oreilles 17 comportant chacune un orifice 170 configuré pour recevoir un premier pion 119. De manière similaire, la seconde extrémité 162 de la patte radiale d'accrochage aval 16 comprend deux secondes oreilles 18 comportant chacune un orifice 180 configuré pour recevoir un second pion 120. Les premières et secondes oreilles 17 et 18 s'étendent en saillie dans la direction radiale D_{R} de l'anneau de turbine 1 respectivement de la seconde extrémité 142 de la patte d'accrochage radiale amont 14 et de la seconde extrémité 162 de la patte d'accrochage radiale aval 16.

Les orifices 170 et 180 peuvent être circulaires ou oblongs. De préférence l'ensemble des orifices 170 et 180 comprend une portion d'orifices circulaires et une portion d'orifices oblongs. Les orifices circulaires permettent d'indexer tangentiellement les anneaux et d'empêcher qu'ils puissent se déplacer tangentiellement (notamment en cas de touche par l'aube). Les orifices oblongs permettent d'accommoder les dilatations différentielles entre le CMC et le métal. Le CMC a un coefficient de dilatation inférieur à celui du métal. A chaud, les longueurs dans le sens tangentiel du secteur d'anneau et de la portion de carter en vis-à-vis vont donc être différentes. S'il n'y avait que des orifices circulaires, le carter métallique imposerait ses déplacements à l'anneau en CMC, ce qui serait source de contraintes mécaniques très élevées dans le secteur d'anneau. Avoir des trous oblongs dans l'ensemble d'anneau permet au pion de coulisser dans ce trou et d'éviter le phénomène de sur-contrainte mentionné ci-dessus. Dès lors, deux schémas de perçages peuvent être imaginés : un premier schéma de perçage, pour un cas à trois oreilles, comprendrait un orifice circulaire sur une bride radiale d'accrochage et deux orifices oblongs tangentiels sur l'autre bride radiale d'accrochage, et un deuxième schéma de perçage, pour un cas à au moins quatre oreilles, comprendrait un orifice circulaire et un orifice oblong par bride radiale d'accrochage en vis-à-vis à chaque fois. D'autres cas annexes peuvent être envisagés également.

Pour chaque secteur d'anneau 10, les deux premières oreilles 17 sont positionnées à deux positions angulaires différentes par rapport à l'axe de révolution de l'anneau de turbine 1. De même, pour chaque secteur d'anneau 10, les deux secondes oreilles 18 sont positionnées à deux positions angulaires différentes par rapport à l'axe de révolution de l'anneau de turbine 1.

Pour chaque secteur d'anneau 10, le premier flasque annulaire 33 et la seconde bride radiale annulaire 36 comprennent en outre des surfaces d'appuis rectilignes 110 montées sur les faces du premier flasque annulaire 33 et de la seconde bride radiale annulaire 36 en contact respectivement avec la patte radiale d'accrochage amont 14 et la patte radiale d'accrochage aval 16, c'est-à-dire sur la face aval du premier flasque annulaire 33 et sur la face amont de la seconde bride radiale annulaire 36.

Les appuis rectilignes 110 sont situés sous les orifices 3330 de réception des deux premiers pions 119, c'est-à-dire à l'intérieure des orifices 3330 selon la direction radiale.

Dans une variante, les appuis rectilignes pourraient être montés sur les faces des pattes radiales d'accrochage amont et aval 14 et 16 en contact respectivement avec le premier flasque annulaire amont 33 et la bride radiale annulaire aval 36.

Les appuis rectilignes 110 permettent d'avoir des zones d'étanchéités maîtrisées. En effet, les surfaces d'appui 110 entre le premier flasque annulaire amont 33 et la patte radiale d'accrochage amont 14, d'une part, et entre la bride radiale annulaire aval 36 et la patte radiale d'accrochage aval 16 sont compris dans un même plan rectiligne.

Plus précisément, avoir des appuis sur des plans radiaux permet de s'affranchir des effets de bascule axiale de l'anneau de turbine 1. En effet, lors de la bascule de l'anneau en fonctionnement, l'appui rectiligne permet de conserver une ligne d'étanchéité complète.

Le maintien radial de l'anneau 1 est assuré par le premier flasque annulaire 33 qui est plaqué sur la première bride radiale annulaire 32 de la structure de support d'anneau 3 et sur la patte radiale d'accrochage amont 14. Le premier flasque annulaire 33 assure l'étanchéité entre la cavité veine et la cavité hors veine de l'anneau.

Le second flasque annulaire 34 assure la liaison entre la partie aval du DHP, la structure de support d'anneau 3, ou carter, par contact surfacique radial, et le premier flasque annulaire 33 par contact surfacique axial.

La structure de support d'anneau 3 comprend en outre des pions radiaux 38 qui permettent de plaquer l'anneau en position radiale basse c'est-à-dire vers la veine, de manière déterministe. Il y a en effet un jeu entre les pions axiaux et les alésages sur l'anneau pour compenser la dilatation différentielle entre le métal et les éléments en CMC qui s'opère à chaud. Les pions radiaux 38 coopèrent avec des orifices 380 réalisés selon la direction radiale D_{R} dans la couronne centrale 31 de la structure de support d'anneau 3.

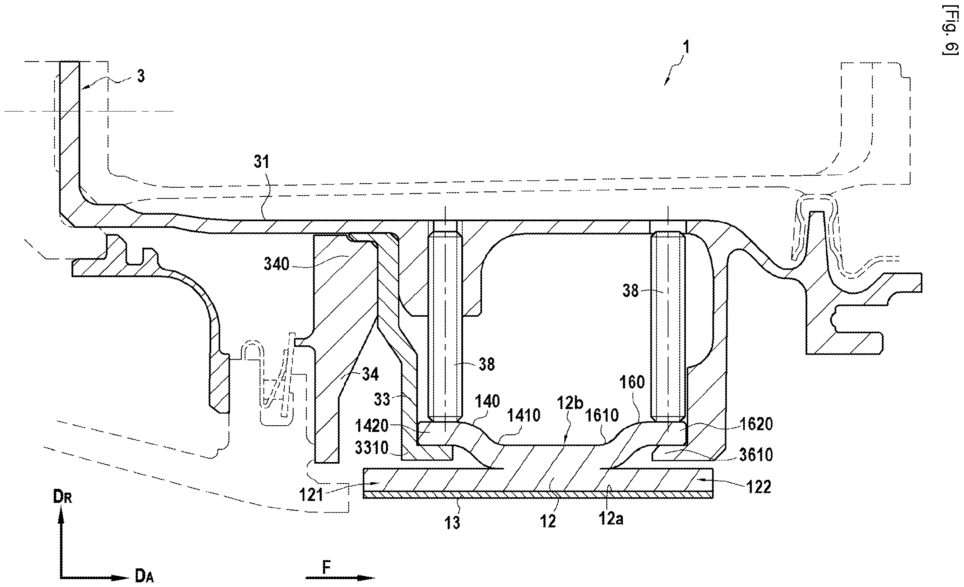

Sur la figure 6 est présentée une vue schématique en coupe d'un deuxième mode de réalisation de l'ensemble d'anneau de turbine.

Le deuxième mode de réalisation illustré sur la figure 6 diffère du premier mode de réalisation illustré sur les figures 2 à 5 en ce que le secteur d'anneau 10 présente, dans le plan défini par les directions axiale D_{A} et radiale D_{R}, une section en forme de K comprenant une base annulaire 12 avec, suivant la direction radiale D_{R} de l'anneau, une face interne 12a revêtue d'une couche 13 de matériau abradable formant une barrière thermique et environnementale et qui définit la veine d'écoulement de flux gazeux dans la turbine. Des pattes radiales d'accrochage amont et aval 140, 160 sensiblement en forme de S s'étendent, suivant la direction radiale D_{R}, à partir de la face externe 12b de la base annulaire 12 sur toute la largeur de celle-ci et au-dessus des portions d'extrémité circonférentielles amont et aval 121 et 122 de la base annulaire 12.

Les pattes radiales d'accrochage 140 et 160 présentent une première extrémité, référencée respectivement 1410 et 1610, solidaire de la base annulaire 12 et une seconde extrémité libre, référencée respectivement 1420 et 1620. Les extrémités libres 1420 et 1620 des pattes radiales d'accrochage amont et aval 140 et 160 s'étendent soit parallèlement au plan dans lequel s'étend la base annulaire 12 , c'est-à-dire dans selon un plan circulaire, soit de manière rectiligne alors que les pattes d'accrochage 140 et 160 s'étendent de manière annulaire. Dans cette seconde configuration où les extrémités sont rectilignes et les pattes d'accrochages annulaires, dans le cas d'une éventuelle bascule de l'anneau pendant le fonctionnement, les appuis surfaciques deviennent alors des appuis linéiques ce qui offre une étanchéité plus importante que dans le cas d'appuis ponctuels. La seconde extrémité 1620 de la patte radiale d'accrochage aval 160 est maintenue entre une portion 3610 de la seconde bride radiale annulaire 36 s'étendant en saillie dans la direction axiale D_{A} depuis la première extrémité 361 de la seconde bride radiale annulaire 36 dans le sens opposé au sens du flux F et l'extrémité libre de la vis 38 associée, c'est-à-dire la vis opposée à la tête de vis. La seconde extrémité 1410 de la patte radiale d'accrochage amont 140 est maintenue entre une portion 3310 du premier flasque annulaire 33 s'étendant en saillie dans la direction axiale D_{A} depuis la première extrémité 331 du premier flasque annulaire 33 dans le sens du flux F et l'extrémité libre de la vis 38 associée.

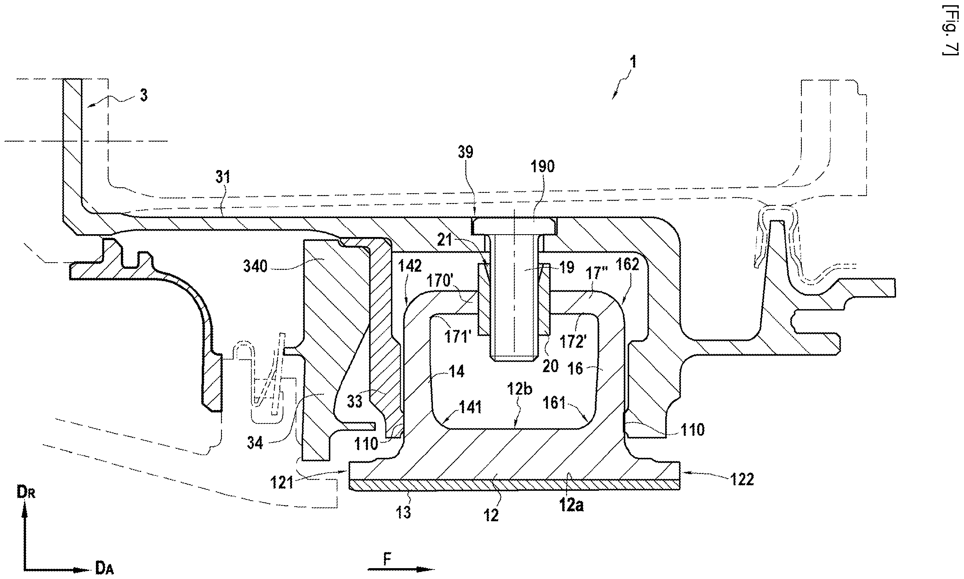

Sur la figure 7 est présentée une vue schématique en coupe d'un troisième mode de réalisation de l'ensemble d'anneau de turbine.

Le troisième mode de réalisation illustré sur la figure 8 diffère du premier mode de réalisation illustré sur les figures 2 à 5 en ce que le secteur d'anneau 10 présente dans le plan défini par les directions axiale D_{A} et radiale D_{R}, sur une partie du secteur d'anneau 10, une section en forme de O au lieu d'une section en forme de π inversé, la section d'anneau 10 étant fixée à la structure de support d'anneau 3 à l'aide d'une vis 19 et d'une pièce de fixation 20, les vis 38 étant supprimées.

Dans le troisième mode de réalisation illustré sur la figure 7, le secteur d'anneau 10 comprend une patte axiale d'accrochage 17' s'étendant entre les pattes radiales d'accrochage amont et aval 14 et 16. La patte axiale d'accrochage 17' s'étend plus précisément, dans la direction axiale D_{A}, entre la seconde extrémité 142 de la patte radiale d'accrochage amont 14 et la seconde extrémité 162 de la patte radiale d'accrochage aval 16.

La patte axiale d'accrochage 17' comprend une extrémité amont 171' et une extrémité aval 172' séparées par une partie centrale 170'. Les extrémités amont et aval 171' et 172' de la patte d'accrochage axiale 17' s'étendent en saillie, dans la direction radiale D_{R}, de la seconde extrémité 142, 162 de la patte radiale d'accrochage 14, 16 à laquelle elles sont couplées, de manière à avoir une partie centrale 170' de patte axiale d'accrochage 17' surélevée par rapport aux secondes extrémités 142 et 162 des pattes radiales d'accrochage amont et aval 14 et 16.

Pour chaque secteur d'anneau 10, l'ensemble d'anneau de turbine comprend une vis 19 et une pièce de fixation 20. La pièce de fixation 20 est fixée sur la patte axiale d'accrochage 17'.

La pièce de fixation 20 comprend en outre un orifice 21 doté d'un taraudage coopérant avec un filetage de la vis 19 pour fixer la pièce de fixation 20 à la vis 19. La vis 19 comprend une tête de vis 190 dont le diamètre est supérieur au diamètre d'un orifice 39 réalisé dans la virole centrale 31 de la structure de support de l'anneau 3 au travers duquel la vis 19 est insérée avant d'être vissée à la pièce de fixation 20.

La solidarisation radiale du secteur d'anneau 10 avec la structure de support d'anneau 3 est réalisée à l'aide de la vis 19, dont la tête 190 est en appui sur la couronne centrale 31 de la structure de support de l'anneau 3, et de la pièce de fixation 20 vissée à la vis 19 et fixée à la patte axiale d'accrochage 17' du secteur d'anneau 10, la tête de vis 190 et la pièce de fixation 20 exerçant des forces de sens opposés pour maintenir ensemble l'anneau 1 et la structure de support d'anneau 3.

Dans une variante, le maintien radial de l'anneau vers le bas peut être assuré à l'aide de quatre pions radiaux plaqués sur la patte axial d'accrochage 17', et le maintien radial vers le haut de l'anneau peut être assuré par une tête pioche, solidaire de la vis 19, placée sous l'anneau dans la cavité entre la patte axiale d'accrochage 17' et la face externe 12b de la base annulaire.

Dans les deuxième et troisième modes de réalisation illustrés sur les figures 6 et 7, la seconde extrémité 342 du second flasque annulaire 34 comprend une butée de contact 340 s'étendant en saillie dans la direction axiale D_{A} entre le second flasque annulaire 34 et le premier flasque annulaire 33. La butée de contact 340 permet de maintenir une distance entre la première extrémité 331 du premier flasque annulaire 33 et la première extrémité 341 du second flasque annulaire 34 lors du basculement du second flasque annulaire 34 induit par l'effort DHP.

On décrit maintenant un procédé de réalisation d'un ensemble d'anneau de turbine correspondant à celui représenté sur la figure 2, c'est-à-dire selon le premier mode de réalisation illustré sur les figures 2 à 5, ledit procédé ne faisant pas partie de l'invention revendiquée.

Chaque secteur d'anneau 10 décrit ci-avant est réalisé en matériau composite à matrice céramique (CMC) par formation d'une préforme fibreuse ayant une forme voisine de celle du secteur d'anneau et densification du secteur d'anneau par une matrice céramique.

Pour la réalisation de la préforme fibreuse, on peut utiliser des fils en fibres céramique ou des fils en fibres de carbone.

La préforme fibreuse est avantageusement réalisée par tissage tridimensionnel, ou tissage multicouches avec aménagement de zones de déliaison permettant d'écarter les parties de préformes correspondant aux pattes d'accrochage 14 et 16 des secteurs 10.

Le tissage peut être de type interlock, comme illustré. D'autres armures de tissage tridimensionnel ou multicouches peuvent être utilisées comme par exemple des armures multi-toile ou multi-satin. On pourra se référer au document WO 2006/136755.

Après tissage, l'ébauche peut être mise en forme pour obtenir une préforme de secteur d'anneau qui est consolidée et densifiée par une matrice céramique, la densification pouvant être réalisée notamment par infiltration chimique en phase gazeuse (CVI) qui est bien connue en soi. Dans une variante, la préforme textile peut être un peu durcie par CVI pour qu'elle soit suffisamment rigide pour être manipulée, avant de faire remonter du silicium liquide par capillarité dans le textile pour faire la densification (« Melt Infiltration »).

Un exemple détaillé de fabrication de secteurs d'anneau en CMC est notamment décrit dans le document US 2012/0027572.

La structure de support d'anneau 3 est quant à elle réalisée en un matériau métallique tel qu'un alliage à base de nickel, de cobalt ou de titane.

La réalisation de l'ensemble d'anneau de turbine se poursuit par le montage des secteurs d'anneau 10 sur la structure de support d'anneau 3.

Pour cela, les secteurs d'anneau 10 sont assemblés ensemble sur un outil annulaire de type « araignée » comportant, par exemple, des ventouses configurées pour maintenir chacune un secteur d'anneau 10.

Puis les deux seconds pions 120 sont insérés dans les deux orifices 3650 prévus dans la troisième partie 365 de la seconde bride radiale annulaire 36 de la structure de support d'anneau 3.

L'anneau 1 est ensuite monté sur la structure de support d'anneau 3 en insérant chaque second pion 120 dans chacun des orifices 180 des secondes oreilles 18 des brides radiales d'accrochage aval 16 de chaque secteur d'anneau 10 composant l'anneau 1.

On place ensuite tous les premiers pions 119 dans les orifices 170 prévus dans les première oreilles 17 de la patte radiale d'accrochage 14 de l'anneau 1.

Puis, on vient positionner le premier flasque annulaire 33 en plaçant la seconde portion 334 du premier flasque annulaire 33 en appui contre la première bride radiale et les appuis rectilignes 110 de la première portion 333 du premier flasque annulaire 33 en appui contre la première patte d'accrochage 14 en ajustant le premier flasque annulaire 33 pour que les premiers pions 117 s'insèrent dans les orifices 3330 de la première portion 333 du premier flasque annulaire 33.

On positionne ensuite le second flasque annulaire 34 contre le premier flasque annulaire 33 en insérant les ergots radiaux de centrage 3425 du second flasque annulaire 34 dans chacune des encoches 3325 du premier flasque annulaire 34. Puis, pour fixer les deux flasques amont 33 et 34 ensemble à la structure de support d'anneau 3, on insère des vis 60 dans les orifices 3440, 3340 et 320, coaxiaux, prévus dans la seconde portion 344 du second flasque amont 34, dans la deuxième portion 334 du premier flasque et dans la bride radiale annulaire amont 32 et on serre chacune des vis 60 à l'aide d'un écrou 61.

L'anneau 1 est ainsi maintenu en position axialement à l'aide du premier flasque annulaire 33 et de la seconde bride radiale annulaire 36 en appui respectivement en amont et en aval sur leurs surfaces d'appuis 110 rectilignes respectives. Lors de l'installation du premier flasque annulaire 33, une précontrainte axiale peut être appliquée sur le premier flasque annulaire 33 et sur la patte radiale d'accrochage amont 14 pour pallier l'effet de dilatation différentielle entre le matériau CMC de l'anneau 1 et le métal de la structure de support d'anneau 3. Le premier flasque annulaire 33 est maintenu en contrainte axiale par des éléments mécaniques placés en amont comme cela est illustré en pointillés sur les figures 6 et 7.

L'anneau 1 est maintenu en position radialement à l'aide des premiers et seconds pions 119 et 120 coopérant avec les premières et secondes oreilles 17 et 18 et les orifices 3340 et 3650 du premier flasque annulaire 33 et de la bride radiale annulaire 36.

L'invention fournit ainsi un ensemble d'anneau de turbine permettant le maintien de chaque secteur d'anneau d'une façon déterministe tout en permettant, d'une part, au secteur d'anneau, et par extension à l'anneau, de se déformer sous les effets des montées en température et des variations de pression, et ce notamment indépendamment des pièces métalliques en interface, et, d'autre part, tout en améliorant l'étanchéité entre le secteur hors veine et le secteur veine, notamment l'étanchéité de la cavité située au niveau de la partie radialement supérieure de l'anneau. Tout cela en simplifiant les manipulations et en réduisant leur nombre pour le montage de l'ensemble d'anneau.

L'invention fournit en outre un ensemble d'anneau de turbine doté d'un flasque amont permettant, d'une part, d'assurer l'étanchéité optimale de la cavité définie par l'anneau, et, d'autre part, de s'accommoder efficacement des différentes longueurs axiales de chaque secteur d'anneau CMC qui compose la couronne d'anneau. Autrement dit pour ce second point, le contact rectiligne entre la partie amont de l'anneau et la patte du flasque amont doit être effectif pour chaque secteur d'anneau, bien que ceux-ci aient des largeurs différentes, ces largeurs étant en effet impactées par les tolérances de fabrication.

## Revendications

1. Ensemble d'anneau de turbine comprenant une pluralité de secteurs d'anneau (10) en matériau composite à matrice céramique formant un anneau de turbine (1) et une structure de support d'anneau (3), chaque secteur d'anneau (10) ayant, selon un plan de coupe défini par une direction axiale (D_{A}) et une direction radiale (D_{R}) de l'anneau de turbine (1), une partie formant base annulaire (12) avec, dans la direction radiale (D_{R}) de l'anneau de turbine (1), une face radialement interne (12a) définissant la face interne de l'anneau de turbine (1) et une face radialement externe (12b) à partir de laquelle s'étendent en saillie une première et une seconde pattes d'accrochage (14, 16), la structure de support d'anneau (3) comportant :
- une virole centrale (31) à partir de laquelle s'étendent en saillie une première et une seconde brides radiales (32, 36) à partir desquelles sont maintenues les première et seconde pattes d'accrochage (14, 16) de chaque secteur d'anneau (10),
- un premier flasque (33) annulaire en une pièce disposé en amont de l'anneau de turbine (1) et de la première bride radiale (32) par rapport au sens d'un flux d'air (F) destiné à traverser l'ensemble d'anneau de turbine (1) et présentant dans la direction radiale (D_{R}) une première extrémité (331) libre, une seconde extrémité (332) opposée à la première extrémité (331), et
- un second flasque (34) annulaire disposé en amont du premier flasque (33) et présentant une première extrémité (341) libre, une seconde extrémité (342) opposée à la première extrémité (341), une face amont (348) et une face aval (349) s'étendant toutes deux dans la direction radiale (D_{R}), les secondes extrémités (332, 342) des premier et second flasques (33, 34) étant fixées de manière amovible à ladite première bride radiale (32),
**caractérisé en ce que** le premier flasque (33) comprend un épaulement (3320) s'étendant en saillie dans la direction axiale (D_{A}) vers l'amont depuis la seconde extrémité (332) du premier flasque (33), et le second flasque (34) comprend un renfoncement (3420) sur le coin formé à la jonction entre la seconde extrémité (342) et la face aval (349) du second flasque (34), ledit renfoncement (3420) formant une butée axiale configurée pour coopérer par emboîtement avec ledit épaulement (3320) dans la direction axiale (D_{A}).

2. Ensemble selon la revendication 1, dans lequel le premier flasque (33) comprend en outre une première portion (333) s'étendant depuis la première extrémité (331), et une seconde portion (334) s'étendant entre la première portion (333) et la seconde extrémité (332), la première portion (333) étant en appui contre la première patte d'accrochage (14), la seconde portion (334) étant fixée à la première bride radiale (32), et la première portion (333) comprenant une pluralité de fentes radiales (336) débouchant à ladite première extrémité (331) du premier flasque (33) et délimitant des secteurs de première portion (337) du premier flasque (33).

3. Ensemble selon la revendication 2, dans lequel le premier flasque (33) comprend en outre un joint inter-secteur (339) pour chaque fente radiale (336) du premier flasque (33), chaque fente radiale (336) présentant une première et une seconde surfaces (3364) parallèles dans la direction radiale (D_{R}) et dans la direction axiale (D_{A}), la première surface (3364) d'une fente radiale (336) comprenant une première gorge (3365) et la seconde surface comprenant une seconde gorge s'étendant symétriquement à la première gorge (3365) par rapport à un plan s'étendant dans la direction axiale (D_{A}) et dans la direction radiale (D_{R}) le long de la fente radiale (336), une première portion du joint inter-secteur (339) étant insérée dans la première gorge (3365) et une seconde portion du joint inter-secteur (339) étant insérée dans la seconde gorge.

4. Ensemble selon l'une des revendications 2 ou 3, dans lequel le premier flasque (33) comprend, pour chaque fente radiale (336), un orifice de décharge (338), et chaque fente radiale (336) débouche d'une part à la première extrémité (331) du premier flasque (33) et d'autre part dans l'orifice de décharge (338).

5. Ensemble selon la revendication 4, dans lequel les orifices de décharge (338) sont des orifices circulaires présentant un diamètre compris entre 0,5 mm et 10 mm et de préférence entre 1 mm et 5 mm.

6. Ensemble selon l'une des revendications 3 à 5, dans lequel le premier flasque (33) comprend, au droit de chaque fente radiale (336), une encoche (3325) réalisée dans l'épaulement (3320), l'encoche (3325) s'étendant dans un plan comprenant une direction circonférentielle (D_{C}) de l'anneau et la direction axiale (D_{A}) et coupant un plan comprenant la direction axiale (D_{A}) et la direction radiale (D_{R}) et traversant la fente radiale (336).

7. Ensemble selon la revendication 6, dans lequel le renfoncement (3420) du second flasque (34) est segmenté dans la direction circonférentielle (D_{C}) en une pluralités de segments de renfoncement (3422) adjacents dans la direction circonférentielle (D_{C}), deux segments de renfoncement (3422) adjacents dans la direction circonférentielle (D_{C}) étant séparés par un ergot radial (3425) de centrage formant une butée dans une direction circonférentielle (D_{C}) de l'anneau et conformé pour coopérer avec une encoche (3325) du premier flasque (33) dans la direction circonférentielle (D_{C}), chaque ergot radial (3425), s'étendant depuis le renfoncement (3420) en saillie dans la direction radiale (D_{R}) et dans la direction axiale (D_{A}) vers l'aval.

8. Ensemble selon la revendication 7, dans lequel chaque encoche (3325) comprend, dans un plan comprenant la direction circonférentielle (D_{C}) et la direction axiale (D_{A}) de l'anneau, deux parois latérales (3325a) parallèles s'étendant selon la direction axiale (D_{A}) et une paroi de fond (3325b) s'étendant selon la direction circonférentielle (D_{C}) entre les deux parois latérales (3325a), les parois latérales (3325a) de l'encoche (3325) étant chacune raccordée à la paroi de fond (3325b) en décrivant un arc (3325c).

9. Ensemble selon l'une des revendications 1 à 8, dans lequel la première extrémité (341) du second flasque (34) est distante de la première extrémité (331) du premier flasque (33) dans la direction axiale (D_{A}).

10. Ensemble selon l'une des revendications 1 à 9, dans lequel le premier flasque (33) présente une épaisseur dans la direction axiale (D_{A}) inférieure à l'épaisseur dans la direction axiale (D_{A}) du second flasque (34).

11. Ensemble selon l'une des revendications 1 à 10, dans lequel la seconde bride radiale (36) de la structure de support d'anneau (3) présente une première extrémité (361) libre et une seconde extrémité (362) solidaire de la virole centrale (31) de la structure de support d'anneau (3), la première extrémité (361) de la seconde bride radiale (36) étant au contact de la seconde patte d'accrochage (16) de l'anneau de turbine (1) et présentant une épaisseur dans la direction axiale (D_{A}) supérieure à l'épaisseur de la première extrémité (331) du premier flasque (33).

12. Ensemble selon l'une des revendications 1 à 11, dans lequel le secteur d'anneau présente une section en π selon le plan de coupe défini par la direction axiale (D_{A}) et la direction radiale (D_{R}), et l'ensemble comprend, pour chaque secteur d'anneau (10), au moins trois pions (119, 120) pour maintenir radialement le secteur d'anneau (10) en position, les première et seconde pattes d'accrochage (14, 16) de chaque secteur d'anneau (10) comprenant chacune une première extrémité (141, 161) solidaire de la face externe (12b) de la base annulaire (12), une seconde extrémité (142, 162) libre, au moins trois oreilles (17, 18) de réception desdits au moins trois pions (119, 120), au moins deux oreilles (17) s'étendant en saillie de la seconde extrémité (142, 162) d'une des première ou seconde pattes d'accrochage (14, 16) dans la direction radiale (D_{R}) de l'anneau de turbine (1) et au moins une oreille (18) s'étendant en saillie de la seconde extrémité (162, 142) de l'autre patte d'accrochage (16, 14) dans la direction radiale (D_{R}) de l'anneau de turbine (1), chaque oreille de réception (17, 18) comportant un orifice (170, 180) de réception d'un des pions (119, 120).

13. Ensemble selon l'une des revendications 1 à 11, dans lequel le secteur d'anneau présente une section en K selon le plan de coupe défini par la direction axiale (D_{A}) et la direction radiale (D_{R}), les première et deuxième pattes d'accrochage (14, 16) ayant une forme de S.

14. Ensemble selon l'une des revendications 1 à 11, dans lequel le secteur d'anneau présente une section en O selon le plan de coupe défini par la direction axiale (D_{A}) et la direction radiale (D_{R}), la première et la deuxième pattes d'accrochage (14, 16) présentant chacune une première extrémité (141, 161) solidaire de la face externe (12b) et une seconde extrémité libre (142, 162), et chaque secteur d'anneau (10) comprenant une troisième et une quatrième pattes d'accrochage (17', 170') s'étendant chacune, dans la direction axiale (D_{A}) de l'anneau de turbine (1), entre une seconde extrémité (142) de la première patte d'accrochage (14) et une seconde extrémité (162) de la deuxième patte d'accrochage (16), chaque secteur d'anneau (10) étant fixé à la structure de support d'anneau (3) par une vis de fixation (19) comportant une tête de vis (190) en appui contre la structure de support d'anneau (3) et un filetage coopérant avec un taraudage réalisé dans une plaque de fixation (20), la plaque de fixation (20) coopérant avec les troisième et quatrième pattes d'accrochage (17', 170').

15. Turbomachine comprenant un ensemble d'anneau de turbine (1) selon l'une quelconque des revendications 1 à 14.

## Patentansprüche

1. Turbinenringanordnung, die eine Vielzahl von Ringsektoren (10) aus Verbundmaterial mit Keramikmatrix, die einen Turbinenring (1) bilden, und eine Ringtragstruktur (3) umfasst, wobei jeder Ringsektor (10) entlang einer Schnittebene, die durch eine axiale Richtung (D_{A}) und eine radiale Richtung (D_{R}) des Turbinenrings (1) definiert ist, einen Teil aufweist, der eine ringförmige Basis (12) mit, in der radialen Richtung (D_{R}) des Turbinenrings (1), einer radial inneren Seite (12a), welche die innere Seite des Turbinenrings (1) definiert, und einer radial äußeren Seite (12b) bildet, ausgehend von der sich hervorstehend eine erste und eine zweite Aufhängelasche (14, 16) erstrecken, wobei die Ringtragstruktur (3) Folgendes umfasst:
- einen mittleren Mantel (31), ausgehend von dem sich hervorstehend ein erster und ein zweiter radialer Flansch (32, 36) erstrecken, ausgehend von denen die erste und die zweite Aufhängelasche (14, 16) von jedem Ringsektor (10) gehalten werden,
- eine einteilige ringförmige erste Wange (33), die dem Turbinenring (1) und dem ersten radialen Flansch (32) in Bezug auf die Richtung einer Luftströmung (F), die dazu bestimmt ist, die Turbinenringanordnung (1) zu durchqueren, vorgelagert angeordnet ist und in der radialen Richtung (D_{R}) ein erstes freies Ende (331) und ein zweites freies Ende (332) umfasst, das dem ersten Ende (331) entgegengesetzt ist, und
- eine zweite ringförmige Wange (34), die der ersten Wange (33) vorgelagert angeordnet ist und ein erstes freies Ende (341), ein zweites freies Ende (342), das dem ersten Ende (341) entgegengesetzt ist, eine vorgelagerte Seite (348) und eine nachgelagerte Seite (349) aufweist, die sich alle beide in der radialen Richtung (D_{R}) erstrecken, wobei die zweiten Enden (332, 342) der ersten und der zweiten Wange (33, 34) auf abnehmbare Weise an dem ersten radialen Flansch (32) befestigt sind,
**dadurch gekennzeichnet, dass** die erste Wange (33) eine Schulter (3320) umfasst, die sich in der axialen Richtung (D_{A}) hin zur vorgelagerten Richtung ausgehend von dem zweiten Ende (332) der ersten Wange (33) hervorstehend erstreckt, und die zweite Wange (34) eine Verstärkung (3420) auf der Ecke umfasst, die an der Verbindung zwischen dem zweiten Ende (342) und der nachgelagerten Seite (349) der zweiten Wange (34) gebildet ist, wobei die Verstärkung (3420) einen axialen Anschlag bildet, der dazu ausgestaltet ist, durch Einpassung mit der Schulter (3320) in der axialen Richtung (D_{A}) zusammenzuwirken.

2. Anordnung nach Anspruch 1, wobei die erste Wange (33) ferner einen ersten Abschnitt (333), der sich ausgehend von dem ersten Ende (331) erstreckt, und einen zweiten Abschnitt (334) umfasst, der sich zwischen dem ersten Abschnitt (333) und dem zweiten Ende (332) erstreckt, wobei der erste Abschnitt (333) gegen die erste Aufhängelasche (14) in Auflage ist, wobei der zweite Abschnitt (334) an dem ersten radialen Flansch (32) befestigt ist und der erste Abschnitt (333) eine Vielzahl von radialen Schlitzen (336) umfasst, die in das erste Ende (331) der ersten Wange (33) münden und Sektoren des ersten Abschnitts (337) der ersten Wange (33) abgrenzen.

3. Anordnung nach Anspruch 2, wobei die erste Wange (33) ferner eine Zwischensektorendichtung (339) für jeden radialen Schlitz (336) der ersten Wange (33) umfasst, wobei jeder radiale Schlitz (336) eine erste und eine zweite Oberfläche (3364) aufweist, die in der radialen Richtung (D_{R}) und in der axialen Richtung (D_{A}) parallel sind, wobei die erste Oberfläche (3364) eines radialen Schlitzes (336) eine erste Nut (3365) umfasst und die zweite Oberfläche eine zweite Nut umfasst, die sich symmetrisch zur ersten Nut (3365) in Bezug auf eine Ebene erstreckt, die sich in der axialen Richtung (D_{A}) und in der radialen Richtung (D_{R}) entlang des radialen Schlitzes (336) erstreckt, wobei ein erster Abschnitt der Zwischensektorendichtung (339) in die erste Nut (3365) eingesetzt ist und ein zweiter Abschnitt der Zwischensektorendichtung (339) in die zweite Nutz eingesetzt ist.

4. Anordnung nach einem der Ansprüche 2 oder 3, wobei die erste Wange (33) für jeden radialen Schlitz (336) eine Ablassöffnung (338) umfasst und jeder radiale Schlitz (336) einerseits am ersten Ende (331) der ersten Wange (33) und andererseits in der Ablassöffnung (338) mündet.

5. Anordnung nach Anspruch 4, wobei die Ablassöffnungen (338) kreisförmige Öffnungen sind, die einen Durchmesser von zwischen 0,5 mm und 10 mm und vorzugsweise zwischen 1 mm und 5 mm aufweisen.

6. Anordnung nach einem der Ansprüche 3 bis 5, wobei die erste Wange (33) gegenüber jedem radialen Schlitz (336) eine Kerbe (3325) umfasst, die in der Schulter (3320) hergestellt ist, wobei die Kerbe (3325) sich in einer Ebene erstreckt, die eine Umfangsrichtung (D_{C}) des Rings und die axiale Richtung (D_{A}) umfasst und eine Ebene schneidet, welche die axiale Richtung (D_{A}) und die radiale Richtung (D_{R}) umfasst und den radialen Schlitz (336) durchquert.

7. Anordnung nach Anspruch 6, wobei die Verstärkung (3420) der zweiten Wange (34) in der Umfangsrichtung (D_{C}) in eine Vielzahl von Verstärkungssegmenten (3422) segmentiert ist, die in der Umfangsrichtung (D_{C}) benachbart sind, wobei zwei in der Umfangsrichtung (D_{C}) benachbarte Verstärkungssegmente (3422) durch einen radialen Zentrieransatz (3425) getrennt sind, der einen Anschlag in einer Umfangsrichtung (D_{C}) des Rings bildet und dazu angepasst ist, mit einer Kerbe (3352) der ersten Wange (33) in der Umfangsrichtung (D_{C}) zusammenzuwirken, wobei jeder radiale Ansatz (3425) sich ausgehend von der Verstärkung (3420) in der radialen Richtung (D_{R}) und in der axialen Richtung (D_{A}) hin zur nachgelagerten Richtung hervorstehend erstreckt.

8. Anordnung nach Anspruch 7, wobei jede Kerbe (3325) in einer Ebene, welche die Umfangsrichtung (D_{C}) und die axiale Richtung (D_{A}) des Rings umfasst, zwei parallele seitliche Wände (3325a), die sich entlang der axialen Richtung (D_{A}) erstrecken, und eine Rückwand (3325b) umfasst, die sich entlang der Umfangsrichtung (D_{C}) zwischen den zwei seitlichen Wänden (3325a) erstreckt, wobei die seitlichen Wände (3325a) der Kerbe (3325) jeweils an die Rückwand (3325b) angeschlossen sind und dabei einen Bogen (3325c) beschreiben.

9. Anordnung nach einem der Ansprüche 1 bis 8, wobei das erste Ende (341) der zweiten Wange (34) von dem ersten Ende (331) der ersten Wange (33) in der axialen Richtung (D_{A}) beabstandet ist.

10. Anordnung nach einem der Ansprüche 1 bis 9, wobei die erste Wange (33) eine Dicke in der axialen Richtung (D_{A}) aufweist, die kleiner als die Dicke der zweiten Wange (34) in der axialen Richtung (D_{A}) ist.

11. Anordnung nach einem der Ansprüche 1 bis 10, wobei der zweite radiale Flansch (36) der Ringtragstruktur (3) ein erstes, freies Ende (361) und ein zweites Ende (362) aufweist, das mit dem mittleren Mantel (31) der Ringtragstruktur (3) fest verbunden ist, wobei das erste Ende (361) des zweiten radialen Flansches (36) mit der zweiten Aufhängelasche (16) des Turbinenrings (1) in Kontakt ist und eine Dicke in der axialen Richtung (D_{A}) aufweist, die größer als die Dicke des ersten Endes (331) der ersten Wange (33) ist.

12. Anordnung nach einem der Ansprüche 1 bis 11, wobei der Ringsektor einen n-förmigen Querschnitt entlang der Schnittebene aufweist, die durch die axiale Richtung (D_{A}) und die radiale Richtung (D_{R}) definiert ist, und die Anordnung für jeden Ringsektor (10) mindestens drei Stifte (119, 120) zum radialen Halten des Ringsektors (10) an seiner Position umfasst, wobei die erste und die zweite Aufhängelasche (14, 16) von jedem Ringsektor (10) jeweils ein erstes Ende (141, 161), das fest mit der äußeren Seite (12b) der ringförmigen Basis (12) verbunden ist, ein zweites, freies Ende (142, 162) und mindestens drei Ösen (17, 18) zur Aufnahme der mindestens drei Stifte (119, 120) umfasst, wobei mindestens zwei Ösen (17) sich von dem zweiten Ende (142, 162) von einer von der ersten oder der zweiten Aufhängelasche (14, 16) in der radialen Richtung (D_{R}) des Turbinenrings (1) hervorstehend erstrecken, und mindestens eine Öse (18) sich von dem zweiten Ende (162, 142) der anderen Aufhängelasche (16, 14) in der radialen Richtung (D_{R}) des Turbinenrings (1) hervorstehend erstreckt, wobei jede Aufnahmeöse (17, 18) eine Öffnung (170, 180) zur Aufnahme eines der Stifte (119, 120) umfasst.

13. Anordnung nach einem der Ansprüche 1 bis 11, wobei der Ringsektor einen K-förmigen Querschnitt entlang der Schnittebene aufweist, die durch die axiale Richtung (D_{A}) und die radiale Richtung (D_{R}) definiert ist, und die erste und die zweite Aufhängelasche (14, 16) eine S-Form aufweisen.

14. Anordnung nach einem der Ansprüche 1 bis 11, wobei der Ringsektor einen O-förmigen Querschnitt entlang der Schnittebene aufweist, die durch die axiale Richtung (D_{A}) und die radiale Richtung (D_{R}) definiert ist, wobei die erste und die zweite Aufhängelasche (14, 16) jeweils ein erstes Ende (141, 161), das mit der äußeren Seite (12b) fest verbunden ist, und ein zweites, freies Ende (142, 162) aufweisen, und jeder Ringsektor (10) eine dritte und eine vierte Aufhängelasche (17', 170') umfasst, die sich jeweils in der axialen Richtung (D_{A}) des Turbinenrings (1) zwischen einem zweiten Ende (142) der ersten Aufhängelasche (14) und einem zweiten Ende (162) der zweiten Aufhängelasche (16) erstrecken, wobei jeder Ringsektor (10) durch eine Befestigungsschraube (19), die einen Schraubenkopf (190) in Auflage gegen die Ringtragstruktur (3) und ein Gewinde umfasst, das mit einem Innengewinde zusammenwirkt, das in einer Befestigungsplatte (20) hergestellt ist, an der Ringtragstruktur (3) befestigt ist, wobei die Befestigungsplatte (20) mit der dritten und der vierten Aufhängelasche (17', 170') zusammenwirkt.

15. Turbomaschine, die eine Turbinenringanordnung (1) nach einem der Ansprüche 1 bis 14 umfasst.

## Claims

1. A turbine ring assembly comprising a plurality of ring segments (10) made of ceramic matrix composite material forming a turbine ring (1) and a ring support structure (3), each ring segment (10) having, along a section plane defined by an axial direction (D_{A}) and a radial direction (D_{R}) of the turbine ring (1), a part forming an annular base (12) with, in the radial direction (D_{R}) of the turbine ring (1), a radially inner face (12a) defining the inner face of the turbine ring (1) and a radially outer face (12b) from which project a first and a second hooking tab (14, 16), the ring support structure (3) including:
- a central shroud (31) from which project a first and a second radial flange (32, 36) from which are retained the first and second hooking tabs (14, 16) of each ring segment (10),
- a first annular flange (33) made of one part disposed upstream of the turbine ring (1) and upstream of the first radial flange (32) with respect to the direction of an air flow (F) intended to traverse the turbine ring assembly (1), and having in the radial direction (D_{R}) a first free end (331), a second end (332) opposite the first end (331), and
- a second annular flange (34) disposed upstream of the first flange (33) and having a first free end (341) , a second end (342) opposite the first end (341), an upstream face (348) and a downstream face (349) both extending in the radial direction (D_{R}), the second ends (332, 342) of the first and second flanges (33, 34) being removably attached to said first radial flange (32),
**characterized in that** the first flange (33) comprises a shoulder (3320) projecting in the axial direction (D_{A}) upstream from the second end (332) of the first flange (33), and the second flange (34) comprises a recess (3420) on the corner formed at the junction between the second end (342) and the downstream face (349) of the second flange (34), said recess (3420) forming an axial stop configured to cooperate by interlocking with said shoulder (3320) in the axial direction (D_{A}).

2. The assembly as claimed in claim 1, wherein the first flange (33) further comprises a first portion (333) extending from the first end (331), and a second portion (334) extending between the first portion (333) and the second end (332), the first portion (333) bearing against the first hooking tab (14), the second portion (334) being attached to the first radial flange (32), and the first portion (333) comprising a plurality of radial slots (336) opening onto said first end (331) of the first flange (33) and delimiting segments of the first portion (337) of the first flange (33).

3. The assembly as claimed in claim 2, wherein the first flange (33) further comprises an inter-segment seal (339) for each radial slot (336) of the first flange (33), each radial slot (336) having a first and a second surface (3364) parallel in the radial direction (D_{R}) and in the axial direction (D_{A}), the first surface (3364) of a radial slot (336) comprising a first groove (3365) and the second surface comprising a second groove extending symmetrically with the first groove (3365) with respect to a plane extending in the axial direction (D_{A}) and in the radial direction (D_{R}) along the radial slot (336), a first portion of the inter-segment seal (339) being inserted into the first groove (3365) and a second portion of the inter-segment seal (339) being inserted into the second groove.

4. The assembly as claimed in one of claims 2 or 3, wherein the first flange (33) comprises, for each radial slot (336), a discharge orifice (338), and each radial slot (336) opens on the one hand onto the first end (331) of the first flange (33) and on the other hand into the discharge orifice (338).

5. The assembly as claimed in claim 4, wherein the discharge orifices (338) are circular orifices having a diameter between 0.5 mm and 10 mm preferably between 1 mm and 5 mm.

6. The assembly as claimed in one of claims 3 to 5, wherein the first flange (33) comprises, plumb with each radial slot (336), a notch (3325) made in the shoulder (3320), the notch (3325) extending in a plane comprising a circumferential direction (D_{C}) of the ring and the axial direction (D_{A}) and intersecting a plane comprising the axial direction (D_{A}) and the radial direction (D_{R}) and traversing the radial slot (336).

7. The assembly as claimed in claim 6, wherein the recess (3420) of the second flange (34) is segmented in the circumferential direction (D_{C}) into a plurality of recess segments (3422) adjacent in the circumferential direction (D_{C}), two recess segments (3422) adjacent in the circumferential direction (D_{C}) being separated by a radial centering dog (3425) forming a stop in a circumferential direction (D_{C}) of the ring and shaped to cooperate with a notch (3325) of the first flange (33) in the circumferential direction (D_{C}), each radial dog (3425), extending from the recess (3420) projecting in the radial direction (D_{R}) and in the axial direction (D_{A}) downstream.

8. The assembly as claimed in claim 7, wherein each notch (3325) comprises, in a plane comprising the circumferential direction (D_{C}) and the axial direction (D_{A}) of the ring, two parallel side walls (3325a) extending along the axial direction (D_{A}) and a bottom wall (3325b) extending along the circumferential direction (D_{C}) between the two side walls (3325a), the side walls (3325a) of the notch (3325) being each connected to the bottom wall (3325b) in a way that makes an arc (3325c).

9. The assembly as claimed in one of claims 1 to 8, wherein the first end (341) of the second flange (34) is distant from the first end (331) of the first flange (33) in the axial direction (D_{A}).

10. The assembly as claimed in one of claims 1 to 9, wherein the first flange (33) has a thickness in the axial direction (D_{A}) less than the thickness in the axial direction (D_{A}) of the second flange (34).

11. The assembly as claimed in one of claims 1 to 10, wherein the second radial flange (36) of the ring support structure (3) has a first free end (361) and a second end (362) forming a single part with the central shroud (31) of the ring support structure (3), the first end (361) of the second radial flange (36) being in contact with the second hooking tab (16) of the turbine ring (1) and having a thickness in the axial direction (D_{A}) greater than the thickness of the first end (331) of the first flange (33).

12. The assembly as claimed in one of claims 1 to 11, wherein the ring segment has a section in the shape of a π along the section plane defined by the axial direction (D_{A}) and the radial direction (D_{R}), and the assembly comprises, for each ring segment (10), at least three pins (119, 120) to radially maintain the ring segment (10) in position, the first and second hooking tabs (14, 16) of each ring segment (10) each comprising a first end (141, 161) forming a single part with the outer face (12b) of the annular base (12), a second free end (142, 162), at least three lugs (17, 18) for receiving said at least three pins (119, 120), at least two lugs (17) projecting from the second end (142, 162) of one of the first or second hooking tabs (14, 16) in the radial direction (D_{R}) of the turbine ring (1) and at least one lug (18) projecting from the second end (162, 142) of the other hooking tab (16, 14) in the radial direction (D_{R}) of the turbine ring (1), each receiving lug (17, 18) including an orifice (170, 180) for receiving one of the pins (119, 120).

13. The assembly as claimed in one of claims 1 to 11, wherein the ring segment has a section shaped like a K along the section plane defined by the axial direction (D_{A}) and the radial direction (D_{R}), the first and second hooking tabs (14, 16) having the shape of an S.

14. The assembly as claimed in one of claims 1 to 11, wherein the ring segment has a section in the shape of an O along the section plane defined by the axial direction (D_{A}) and the radial direction (D_{R}), the first and second hooking tabs (14, 16) each having a first end (141, 161) forming a single part with the outer face (12b) and a second free end (142, 162), and each ring segment (10) comprising a third and a fourth hooking tab (17', 170') each extending, in the axial direction (D_{A}) of the turbine ring (1), between a second end (142) of the first hooking tab (14) and a second end (162) of the second hooking tab (16), each ring segment (10) being attached to the ring support structure (3) by an attaching screw (19) including a screw head (190) bearing against the ring support structure (3) and a thread cooperating with a tapped hole made in an attaching plate (20), the attaching plate (20) cooperating with the third and fourth hooking tabs (17', 170').

15. A turbomachine comprising a turbine ring assembly (1) as claimed in any of claims 1 to 14.
